# EUROPÄISCHE PATENTSCHRIFT

(11) **EP 1 076 016 B1**
(45) Veröffentlichungstag und Bekanntmachung des Hinweises auf die Patenterteilung: **13.11.2002**
(21) Anmeldenummer: 00114142.3
(22) Anmeldetag: 11.07.2000
(51) Int. Cl.: B65F 1/14, B65F 1/16

(54) **Sammelbehälter für Altpapier**
Collecting container for waste paper
Conteneur pour collecte de vieux papier

(30) Priorität: 12.07.1999 AT 47299; 03.12.1999 AT 83199
(43) Veröffentlichungstag der Anmeldung: 14.02.2001
(73) Patentinhaber: System Entsorgung GmbH, 4694 Ohlsdorf (AT)
(72) Erfinder: HUBER, Erwin, A-4694 Ohlsdorf (AT)
(74) Vertreter: Schön, Theodor, Patent- und Zivilingenieur

(56) Entgegenhaltungen:
- EP-A- 0 656 303
- DE-C- 233 585
- DE-U- 9 102 582
- FR-A- 2 690 144

## Beschreibung

Die Erfindung betrifft einen Sammelbehälter mit einer Einwurföffnung für Abfälle, insbesondere für Altpapier.

Bekannte Vorrichtungen zur Sammlung von Papierabfällen bestehen aus einem Behälter, welcher mit einem Deckel verschlossen ist, der einen Einwurfschlitz aufweist. Um zu verhindern, daß einmal eingeworfenes Altpapier wieder aus dem Behälter entnommen wird, sind manche Sammelbehälter verschließbar ausgeführt. Zur Entleerung dieser Sammelbehälter sind speziell ausgerüstete Fahrzeuge notwendig.

Es ist auch bekannt, Altpapier direkt am Ort seines Entstehens, wie etwa in Sekretariaten, getrennt vom übrigen Büroabfall zu sammeln. Dies hat den Vorteil, daß der Abfallstoff ohne weitere Sortierung der Wiederverwertung zugeführt werden kann. Dafür werden entsprechend kleine Sammelbehälter verwendet, welche bevorzugt aus Karton gefertigt sind. Neben einer Mehrzahl von anderen Sammelboxen haben sich insbesondere solche als vorteilhaft erwiesen, welche aus einem Bodenteil, einem davon getrennten Oberteil mit Deckel und einem innenliegenden Sammelsack bestehen. Das Altpapier wird durch einen im Deckel oder in Deckelnähe befindlichen Schlitz eingeworfen. Durch diesen Schlitzeinwurf ist gewährleistet, daß die Papierblätter in geordneten Lagen gesammelt werden. Sobald die Sammelbox gefüllt ist, wird der Behälter nach oben weggezogen und der gefüllte innenliegende Sammelsack durch einen leeren Sammelsack ersetzt. Das Altpapier kann so in vorsortiertem Zustand abtransportiert und der Wiederverwertung zugeführt werden.

In größeren Betrieben, insbesondere in der Industrie tritt sehr häufig der Fall ein, daß Altpapier in solch großen Mengen anfällt, daß die Entsorgung über diese bekannte Einrichtung unzureichend ist. Hier ist es erforderlich Vorrichtungen zu schaffen, welche wesentlich größere Sammelmengen aufnehmen können, welche jedoch im Gegensatz zu den bekannten Altpapierkontainern eine ebenso einfache Handhabung gewährleisten wie die bekannten Sammelboxen aus Karton.

Die vorliegende Erfindung stellt sich die Aufgabe, eine für diese Anforderungen geeignete Vorrichtung zu schaffen. Diese Aufgabe wird mit den kennzeichnenden Merkmalen des Anspruch 1 gelöst.

Gemäß Anspruch 1 weist der Sammelbehälter eine Einwurföffnung auf und besteht aus einem Gehäuse, welches einen Hohlraum umfasst, in welchem ein Sammelinnenbehälter, insbesondere ein Sammelsack, welcher zum Abtransport der gesammelten Abfälle dient, angeordnet ist. Das Gehäuse besteht aus einem Bodenteil und einem auf diesen Bodenteil aufgesetzten oder über diesen Bodenteil gestülpten Behälter, der sich aus einer oberseitigen Abdeckung und einer Umfangswandung zusammensetzt, wobei der Behälter mit dem Bodenteil lösbar verbunden ist. Innerhalb des Gehäuses ist ein Gestänge angeordnet, an welchem der Sammelinnenbehälter aufgehängt ist. Das Gestänge ist mit dem Bodenteil verbunden und weist Einrichtungen zur Halterung und Lagefixierung des Sammelinnenbehälters auf. Eine oder mehrere am Gestänge angeordnete Laschen ragen durch eine oder mehrere Ausnehmungen im Behälter und werden mit einer Sperrvorrichtung derart verriegelt, dass der Sammelbehälter von Unbefugten nicht geöffnet werden kann. Zur Entnahme des Sammelinnenbehälters wird nach der Entriegelung der Sperrvorrichtung der Behälter über das Gestänge hinaus angehoben.

Der Sammelinnenbehälter, der vorteilhafterweise ein Sack ist, kann mit einfachen Mitteln, etwa einer Sackkarre aus dem Gebäude abtransportiert werden. Es entfällt die Notwendigkeit, zentral, etwa im Hof eines Gebäudes einen Sammelkontainer aufstellen zu müssen, der erfindungsgemäße Sammelbehälter ist witterungsunabhängig und platzsparend in unmittelbarer Nähe zum Anfallort des Altpapiers aufgestellt und kann von nur einer Person ohne Probleme mit herkömmlichen einfachen Mitteln entleert werden. Der Behälter ist vorteilhafter weise aus Leichtmetall oder einem Verbundwerkstoff gefertigt, um ohne wesentliche Kraftanstrengung bis zu 1,5 Meter angehoben werden zu können.

In einer bevorzugten Ausführungsform stellt sich die vorliegende Erfindung die zusätzliche Aufgabe, den erfindungsgemäßen Sammelbehälter noch dahingehend zu verbessern, daß die gesamte Vorrichtung bei ihrer Auslieferung an den Aufstellort ein wesentlich geringeres Frachtvolumen beansprucht.

Diese zusätzliche Aufgabe wird dadurch gelöst, daß der Behälter und insbesondere seine Umfangswandung aus mehreren Einzelteilen gefertigt werden, welche in einfachster Weise und ohne die Zuhilfenahme von Werkzeug am Aufstellungsort zusammengebaut werden können und andererseits das Gestänge lösbar mit der Bodentasse verbunden ist, wobei auch für die Befestigung des Gestänges an der Bodenplatte kein Werkzeug benötigt wird.

Im oberen Teil des Behälters befindet sich die Einwurföffnung, wobei diese Öffnung entweder in der Umfangswandung, knapp unterhalb der oberseitigen Abdeckung, oder in der oberseitigen Abdeckung vorgesehen sein kann. Innerhalb des Sammelbehälters befindet sich der eigentliche Sammelinnenbehälter, der zum Abtransport des Sammelgutes dient. Sobald der Sammelinnenbehälter gefüllt ist, wird der Behälter von dem Bodenteil über den Sammelinnenbehälter und das Gestänge hinaus abgehoben und der gefüllte Sammelinnenbehälter gegen einen leeren Sammelinnenbehälter ausgetauscht.

Das Gestänge der erfindungsgemäßen Vorrichtung besteht aus einem U-förmigen, bevorzugt rohrförmigen Teil mit gleich langen Schenkeln, welche beinahe so lang sind, wie die Längserstreckung der Umfangswandung. Das Gestänge weist in den beiden Krümmungen Haltevorrichtungen auf, die in einer Ebene liegen. Der Sammelinnenbehälter wird an seinem oberen Rand über diese und gegebenenfalls weitere Haltevorrichtungen in seiner Lage fixiert. Diese weiteren Haltevorrichtungen können sich an gegenüberliegenden Stellen der Innenseite der Umfangswandung des Sammelbehälters, etwa in gleicher Höhe wie die Haltevorrichtungen am Gestänge befinden und mit diesen ein Viereck bilden.

Es ist aber auch möglich, ein Gestänge zu verwenden, welches aus zwei Teilen besteht. Ein erster Teil hat die Form eines U-förmigen Rohres und ist mit seinen beiden Enden an der Bodentasse 5 fixiert. Ein zweiter Teil, welcher mittig im Schwerpunkt des U-förmigen Rohres aufgehängt ist, ist geradlinig und weist eine Länge auf, die in etwa der Länge zwischen den beiden Krümmungen des U-förmigen Rohres entspricht. Die Aufhängung ist so ausgestaltet, daß der zweite Teil des Gestänges in alle Richtungen hin frei beweglich ist. Beide Gestängeteile weisen je zwei Haltevorrichtungen auf, die alle in einer Ebene liegen. Der Sammelinnenbehälter wird an seinem oberen Rand über diese Haltevorrichtungen in seiner Lage fixiert. Bei der Entnahme des gefüllten Sackes wird dieser nach Entfernen des Behälters, noch am Gestänge befestigt zur Seite geschwenkt, die Sackkarre untergeschoben und dann der Sack vom Gestänge gelöst. Dadurch ist es ohne große Kraftanstrengung möglich, Sammelsäcke mit erheblichem Gewicht problemlos zu manipulieren.

Die Form des Behälters und damit die Form des Sammelbehälters kann im Prinzip sowohl rund als auch eckig sein, bevorzugt ist sie rechteckig oder quadratisch. Desweiteren ist es möglich, die oberseitige Abdeckung sowohl flach als auch rund auszuführen. Die Gestängeteile können dieser Geometrie angepaßt ausgeführt sein.

Quadratische oder rechteckige Formen ermöglichen die Ausführung der Umfangswandung aus flachen Platten, wobei eine bevorzugte Ausführungsform aus zwei Teilen besteht, welche jeweils aus zwei, entlang einer Kante gelenkig miteinander verbundenen Platten gefertigt sind. Zum Zweck der Auslieferung des Sammelbehälters werden die Teile im zusammengeklappten Zustand auf handelsüblichen Paletten transportiert. Die freien Kanten der Teile sind bevorzugt so geformt, daß sie über ihre gesamte Länge eine Einstecklasche bilden.

Bekanntlich unterliegen eine Vielzahl von Daten, insbesondere personenbezogene Daten, dem gesetzlichen Datenschutz. Entsprechende Aufzeichnungen sind für den Fall, daß sie nicht mehr benötigt werden, für Dritte unkenntlich zu machen. Formulare, Aktenteile, Handaufzeichnungen, etc. auf Papier werden daher üblicherweise in nicht mehr zusammensetzbare, kleine Papierstücke zerhäckselt oder in Papierstreifen zerschnitten. Weiters fallen, insbesondere im Bereich der Industrie, eine Vielzahl von Aufzeichnungen auf Papier an, wie Geschäftskorrespondenz, Pläne, Entwicklungsskizzen, fehlerhafte Schreiben aus Sekretariaten, etc., die nicht dem gesetzlichen Datenschutz unterliegen, aber aus Gründen des Wettbewerbs geheimhaltungsbedürftig sind. Auch diese in großem Umfang anfallenden Altpapiermengen sind üblicherweise durch Zerkleinern für Dritte unkenntlich zu machen.

Dazu ist es bekannt, insbesondere in Sekretariaten, relativ kleine Geräte als sogenannte Schriftgutvernichter aufzustellen. Diese kleinen Geräte sind weder für größere und stärkere Papierformate, noch für große anfallende Mengen geeignet. Die Entsorgung größerer, geheimhaltungsbedürftiger und sicherheitsrelevanter Altpapiermengen wird daher von Spezialfirmen mit großen Papierhäckselmaschinen durchgeführt.

Um unbefugten Dritten den Zugriff auf solches Altpapier nicht zu ermöglichen, gleichzeitig jedoch den Aufwand für die Zerkleinerung dieses Altpapiers einzusparen, wird der erfindungsgemäße Sammelbehälter versperrbar ausgeführt. Dazu wird am Gestänge mindestens eine Lasche angebracht, welche beim Aufsetzen des Behälters auf dem Bodenteil aus einer schlitzförmigen Ausnehmung herausragt. Nun kann mittels eines herkömmlichen Vorhangschlosses oder einer ähnlichen Vorrichtung der Sammelbehälter so versperrt werden, daß das Abheben des Behälters für Nichtberechtigte zuverlässig verhindert wird.

In einer bevorzugten Ausführungsform wird der Sammelbehälter im Bereich der Einwurföffnung so ausgestaltet, daß es auch unmöglich wird, bereits eingeworfenes Altpapier wieder über die Einwurföffnung zu entnehmen. Dazu wird hinter dem Einwurfschlitz ein schräg zur Behälterinnenseite weisender Eingriffsabweiser in Form einer Blechplatte angeformt. In einer weiteren bevorzugten Ausführungsform wird zusätzlich eine Eingriffsfalle angebracht, welche das Herausziehen einer hinein greifenden Hand unmöglich macht. Diese Falle besteht aus einem oder mehreren Blechteilen, welche an einer Längsseite der Einwurföffnung gelenkig angebracht sind.

Um zu verhindern, daß ein versperrter Sammelbehälter zur Brandfalle werden kann, muß dieser so ausgeführt sein, daß kein Luftzug durch das Sammelgut entstehen kann. Um dies zu gewährleisten werden in einer bevorzugten Ausführungsform der Erfindung die Seitenwände des Bodenteils den offenen Rand der Umfangswandung möglichst paßgenau umgreifen. Um dennoch ein problemloses Aufsetzen des Behälters zu ermöglichen, werden in einer besonders bevorzugten Ausführungsform die Seitenwände der Bodentasse im oberen Randbereich nach außen erweitert ausgeführt. Dadurch wirken sie beim Aufsetzen des Behälters auf diesen zentrierend.

In einer Variante des erfindungsgemäßen Sammelbehälters ist der Behälter auf seiner der Bodentasse gegenüber liegenden Seite mit einem abhebbaren Deckel verschlossen, was das Einbringen von größeren Papierstößen, wie etwa von EDV-Ausdrucken wesentlich erleichtert.

Um mehrere der erfindungsgemäßen Sammelbehälter, deren Behälter bzw. Umfangswandung einteilig ausgeführt ist, volumensparend transportieren zu können, hat es sich als vorteilhaft erwiesen, die Umfangswandung leicht konisch bzw. schräg verlaufend, zum Bodenteil hin erweitert zu gestalten. Dadurch wird es möglich, mehrere Behälter bzw. Umfangswandungen übereinander zu stapeln.

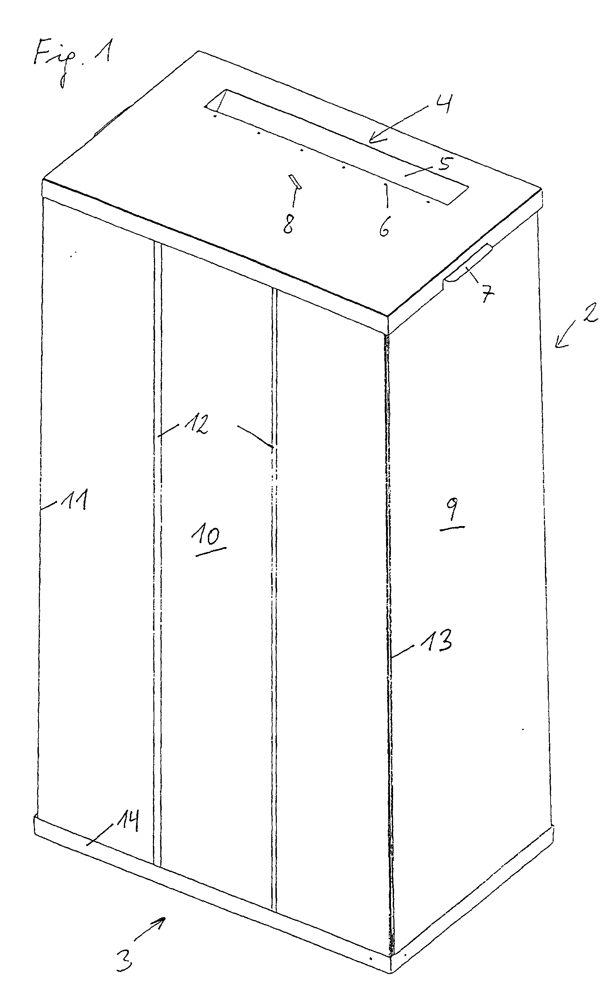

Die erfindungsgemäße Vorrichtung wird anhand der Figuren 1 bis 8 näher erläutert. Es sind jedoch nicht alle technischen Merkmale von möglichen Ausführungsvarianten der Erfindung den Figuren zu entnehmen. Insbesondere ist die einteilige Ausführung des Behälters bestehend aus der oberseitigen Abdeckung und der Umfangswandung nicht dargestellt.

Fig. 1 zeigt den erfindungsgemäßen Sammelbehälter, bestehend aus einem Behälter 2 und einer Bodentasse 3. In der oberseitigen Abdeckung befindet sich ein Einwurfschlitz 4 mit einem Eingriffsabweiser 5. Mittels der dargestellten Nieten 6 können die Teile einer Eingriffsfalle 34 an der Innenseite der oberseitigen Abdeckung befestigt sein. Mittels zweier gegenüberliegender Laschen 7 kann die oberseitige Abdeckung auf die Umfangswandung aufgesetzt bzw. von dieser wieder abgehoben werden. Mittig in der oberseitigen Abdeckung ist die schlitzförmige Ausnehmung 8 zu erkennen, durch welche eine am darunter befindlichen Gestänge 19 angeformte Lasche 24 ragen kann, um den Sammelbehälter z.B. mit einem Vorhängeschloß verschließen zu können.

Der Behälter 2 des Sammelbehälters besteht hier aus zwei voneinander lösbaren Ummantelungsteilen, wobei bei dem hier abgebildeten rechteckigen Grundriß bevorzugt jeder Ummantelungsteil aus einem Seitenteil 9 und einem Teil 10 besteht, wobei die Teile 9 und 10 entlang einer Kante 11 gelenkig miteinander verbunden sind. Die Teile 10 können Verstärkungen 12 aufweisen. Die freie Kante 13 ist dergestalt umgebogen, daß sie mit der ebenfalls umgebogenen freien Kante 13 des zweiten Ummantelungsteiles leicht lösbar verkantet.

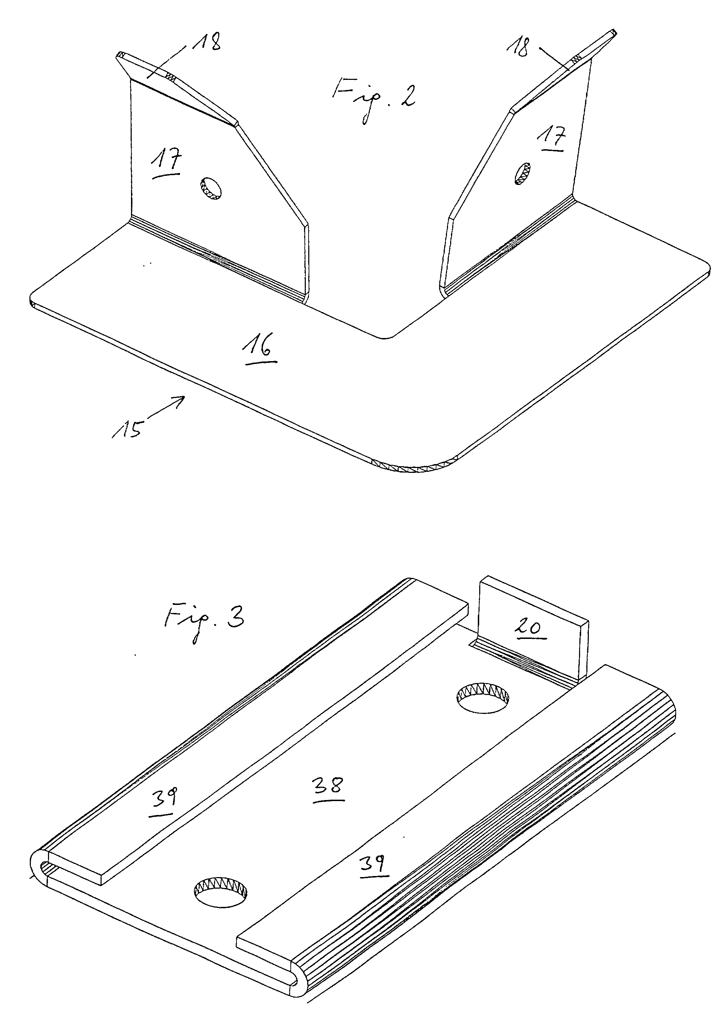

Der Bodenteil 3 ist hier mit einem umlaufenden Rand 14 dargestellt. In einer bevorzugten Ausführungsform besteht der Bodenteil 3 jedoch aus einer flachen Bodenplatte 26 auf welche in den Eckbereichen die in Fig. 2 dargestellten Eckbegrenzungsteile 15 befestigt sind. Diese Eckbegrenzungsteile 15 bestehen aus einer Basis 16, welche unlösbar mit der flachen Bodenplatte 26 verbunden ist und die Form eines liegenden breiten L hat. Im rechten Winkel erheben sich zwei Laschen 17, welche nach Außen geneigte Endbereiche 18 aufweisen. Diese Endbereiche 18 dienen beim Aufsetzen der Ummantelungsteile 9 und 10 als Führungs- und Zentrierhilfen. Der von den vier Eckbegrenzungsteilen 15 umschlossene Bereich entspricht paßgenau dem äußeren Umfang der Umfangswandung.

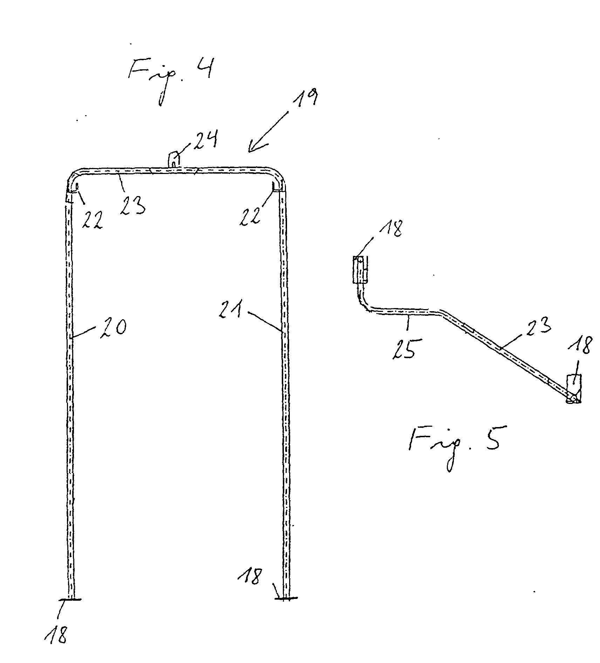

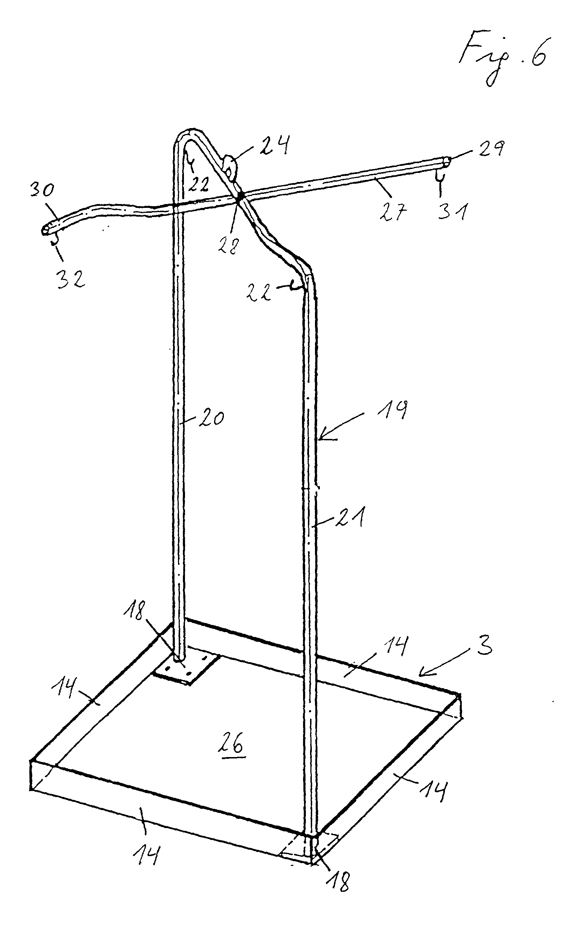

In unmittelbarer Nähe zweier diagonal liegender Eckbegrenzungsteile 15 sind die in Fig. 3 dargestellten Haltelaschen 38 auf der Bodenplatte 26 fest montiert. Die beiden Längsseiten 39 sind U-förmig umgebogen und dienen der Halterung und dem seitlichen Einschub einer Standplatte 18 eines Gestänges 19, wie in Fig. 4 abgebildet. Der Anschlag 20 der Haltelasche 38 begrenzt die Einschubtiefe der Standplatte 18 und verhindert so, daß die Standplatte 18 ein vollständiges Aufsitzen der unteren Kante der Umfangswandung des Behälters 2 auf der Bodenplatte 26 verhindern könnte. Dies ist insbesondere für die Brandsicherheit des Sammelbehälters ausschlaggebend.

Fig. 4 zeigt das Gestänge 19 in einer Seitenansicht. Es ist U-förmig ausgestaltet, wobei die beiden Schenkel 20 und 21 beinahe so lang sind wie die Kanten 11, 13 der Ummantelungsteile 9, 10. In den beiden Krümmungen befinden sich Haken 22 zum Aufhängen eines nicht dargestellten innenliegenden Sammelsackes. Am Verbindungsbügel 23 der beiden Schenkel 20 und 21 ist eine Lasche 24 befestigt, welche beim Aufsetzen des Behälters 2 auf den Bodenteil 3 durch die Ausnehmung 8 ragt und den Bügel eines nicht dargestellten Vorhängeschlosses aufnimmt.

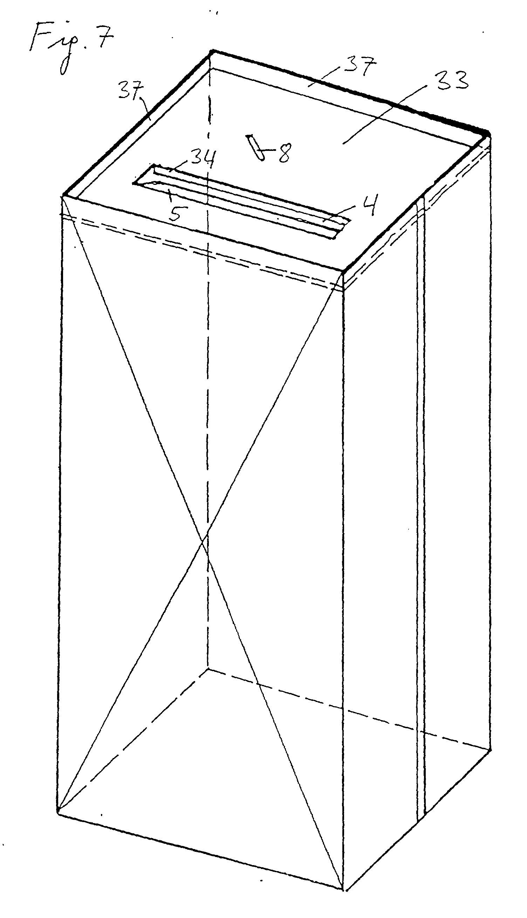

Fig. 5 zeigt das Gestänge 19 in Aufsicht. Man erkennt, daß der Verbindungsbügel 23 eine Biegung 25 aufweist, welche das ungehinderte Einwerfen des Sammelgutes durch den Einwurfschlitz 4 ermöglicht.

Fig. 6 zeigt den Bodenteil 3, bestehend aus der flachen Bodenplatte 26 und den Seitenteilen 14. Der hier dargestellte Bodenteil 3 weist eine viereckige Form aus. In zwei gegenüber liegenden Eckbereichen sind die Standplatten 18 des U-förmigen Teiles eines Gestänges 19 unlösbar mit der Bodenplatte 26 des Bodenteiles 3 verbunden. Ein zweiter Teil 27 des Gestänges 19 ist mittig im Schwerpunkt 28 des U-förmigen Teiles verankert. Diese Verankerung ist so ausgeführt, daß der zweite Teil 27 in jede Richtung hin frei verschwenkbar ist. Auf dem U-förmigen Teil des Gestänges 19 ist die Lasche 24 befestigt. Im Bereich der beiden Krümmungen des U-förmigen Teiles, sowie in den Endbereichen 29 und 30 des zweiten Teiles 27 sind je Haken 22, und 32 zum Befestigen und Lagefixieren eines Sammelinnenbehälters vorgesehen.

Fig. 7 zeigt den Behälter 2 in aufrechter Stellung, so wie er über das Gestänge 19 auf den Bodenteil 3 aufgesetzt wird. Der Behälter 2 hat hier die Form eines rechteckigen Kubus und weist auf seiner oberseitigen Abdeckung 33 einen Einwurfschlitz 4 mit einem Eingriffsabweiser 5 und einer dem Eingriffsabweiser 5 gegenüber liegenden, an der Innenwand der oberseitigen Abdeckung 33 gelenkig montierte Eingriffsfalle 34 auf. Eine Ausnehmung 8 in der oberseitigen Abdeckung 33 dient als Durchtrittsöffnung der Lasche 24, welcher am Gestänge 19 vorhanden ist. Die oberseitige Abdeckung 33 kann, wie hier dargestellt, unlösbar an der Innenseite der oberen Kante der Umfangswandung des Behälters 2 mit einem senkrechten Rand 37 befestigt sein.

## Patentansprüche

1. Sammelbehälter mit einer Einwurföffnung für Abfälle, insbesondere für Altpapier, welches gegebenenfalls Aufzeichnungen enthält, die der Geheimhaltung bedürfen, bestehend aus einem Gehäuse, einem innenliegenden Sammelinnenbehälter, insbesondere einem Sammelsack und einem Gestänge, mit welchem der Sammelinnenbehälter lagefixiert gehalten wird, wobei das Gehäuse aus einem Bodenteil und einem auf diesen Bodenteil aufgesetzten oder über diesen Bodenteil gestülpten Behälter (2) besteht, der sich aus einer oberseitigen Abdeckung und einer Umfangswandung zusammensetzt, wobei der Behälter (2) mit dem Bodenteil (3) lösbar verbunden ist, **dadurch gekennzeichnet, dass** das Gestänge ein innerhalb des Gehäuses angeordnetes und aufragendes Gestänge (19) ist, an welchem der Sammelinnenbehälter lösbar befestigt ist, wobei das Gestänge (19) mit dem Bodenteil (3) verbunden ist und Einrichtungen zur Halterung und Lagefixierung des Sammelinnenbehälters aufweist und wobei der Behälter (2) zur Entnahme des Sammelinnenbehälters über den Sammelinnenbehälter und das Gestänge (19) hinaus angehoben wird.

2. Sammelbehälter nach Anspruch 1, **dadurch gekennzeichnet, dass** eine oder mehrere am Gestänge angeordnete Laschen (24) durch eine oder mehrere im Bereich der oberseitigen Abdeckung angeordnete Ausnehmungen (8) des Behälters (2), und hier mittig ragen und mit einer Sperrvorrichtung derart verriegelt werden, dass der Behälter (2) von Unbefugten nicht angehoben werden kann, wobei das Gestänge aus einem U-förmigen Teil mit zwei von einem Verbindungsbügel (23) verbundenen Schenkeln (20, 21) besteht der Verbindungsbügel (23) bei einer mittig angeordneten Lasche (24) zwischen dieser Lasche (24) und einer der beiden Krümmungen eine Biegung (25) aufweist.

3. Sammelbehälter nach Anspruch 1 oder 2,**dadurch gekennzeichnet, dass** an der Innenseite der Umfangswandung zwei diagonal zueinander liegende Halterungen angebracht sind, welche in einer Ebene mit den Halterungen (22) am Gestänge (19) liegen und gemeinsam mit den Halterungen (22) des Gestänges (19) die Lagefixierung des Sammelinnenbehälters bewirken.

4. Sammelbehälter nach Anspruch 1, 2 oder 3, **dadurch gekennzeichnet, dass** das Gestänge (19) aus zwei Teilen besteht, wovon ein erster Teil U-förmig ausgebildet ist und mit seinen beiden Standplatten (18) mit dem Bodenteil (3) verbunden ist und in seinem Schwerpunkt (28) gelenkig mit einem zweiten Teil (27) verbunden ist, wobei die beiden Enden (29, 30) des zweiten Teiles (27) frei innerhalb des Gehäuses im Nahbereich der oberseitigen Abdeckung liegen und dass die gelenkige Verbindung am zweiten Teil (27) an dessen Schwerpunkt (28) angreift und der zweite Teil (27) in alle Richtungen ungehindert schwenkbar ist.

5. Sammelbehälter nach dem Anspruch 4, **dadurch gekennzeichnet, dass** die Schenkel (20, 21) des U-förmigen Teiles des Gestänges (19), welche bevorzugt gleich lang sind und annähernd der Längserstreckung der Umfangswandung entsprechen, je in eine Standplatte (18) münden und dass die Standplatten (18) unlösbar oder lösbar mit der Bodenplatte (26) verbunden sind und dass bei einer lösbaren Verbindung des Gestänges (19) in unmittelbarer Nähe zweier diagonal liegender Ecken des Bodenteiles (3) Haltelaschen (38) fest auf der Bodenplatte (26) montiert sind, wobei bevorzugt die Längsseiten (39) der Haltelaschen (38) U-förmig umgebogen sind und wobei bevorzugt die Haltelaschen (38) an einer ihrer Stirnseiten einen im rechten Winkel abgebogenen Anschlag (20) aufweisen, derart, dass die Standplatten (18) bis zum Anschlag (20) in die Haltelaschen (38) eingeschoben werden können.

6. Sammelbehälter nach einem der Ansprüche 1 bis 5, **dadurch gekennzeichnet, dass** die Einrichtungen (22, 31, 32) am Gestänge (19) zur Halterung und Lagefixierung des Sammelinnenbehälters als Haken oder Clipse ausgebildet sind und der Sammelinnenbehälter im Bereich seiner Öffnung gegebenenfalls Ösen oder Schlaufen zum Einhängen in den Einrichtungen (22, 31, 32) des Gestänges (19) aufweist.

7. Sammelbehälter nach einem der Ansprüche 1 bis 6, **dadurch gekennzeichnet, dass** die Umfangswandung einen runden oder einen eckigen, bevorzugt einen rechteckigen Querschnitt und der Bodenteil eine komplementäre runde oder eckige, bevorzugt rechteckige Grundrißform aufweist.

8. Sammelbehälter nach einem der Ansprüche 1 bis 7, **dadurch gekennzeichnet, dass** der untere Kantenbereich der Umfangswandung auf der Bodenplatte (26) des Bodenteils steht und von den Seitenteilen (14) des Bodenteils paßgenau umfasst wird, wobei die Seitenteile (14) im oberen Randbereich bevorzugt nach außen erweitert sind.

9. Sammelbehälter nach einem der Ansprüche 1 bis 8, **dadurch gekennzeichnet, dass** die Unterkante der Umfangswandung die Seitenteile (14) des Bodenteils (3) umfassen und dass die Umfangswandung zum Bodenteil hin leicht konisch erweitert ist.

10. Sammelbehälter nach einem der Ansprüche 1 bis 9, **dadurch gekennzeichnet, dass** das Bodenteil aus einer flachen Bodenplatte (26) und vier Eckbegrenzungsteilen (15) besteht, von denen eine Basis (16) unlösbar mit der Bodenplatte (26) verbunden ist und sich im rechten Winkel davon erhebende Laschen (17) aufweist, welche bevorzugt nach außen geneigte Endbereiche (18) aufweisen.

11. Sammelbehälter nach einem der Ansprüche 1 bis 10, **dadurch gekennzeichnet, dass** die oberseitige Abdeckung und die Umfangswandung aus voneinander trennbaren Teilen bestehen, welche gegebenenfalls über ein Scharniergelenk miteinander verbunden sein können.

12. Sammelbehälter nach einem der Ansprüche 1 bis 11, **dadurch gekennzeichnet, dass** die Einwurföffnung (4) in der oberseitigen Abdeckung angeordnet und hinter der Einwurföffnung (4) ein schräg zum Hohlraum weisender Eingriffsabweiser (5) in Form einer Blechplatte angeformt ist und dass gegenüber dem Eingriffsabweiser (5) an der Einwurföffnung (4) ein oder mehrere starre Teile (34) gelenkig an der Innenseite der oberseitigen Abdeckung angeformt sind.

13. Sammelbehälter nach einem der Ansprüche 1 bis 12, **dadurch gekennzeichnet, dass** die Einwurföffnung (4) in der Umfangswandung in unmittelbarer Nähe zur oberseitigen Abdeckung angeordnet und hinter der Einwurföffnung (4) ein schräg zum Hohlraum weisender Eingriffsabweiser (5) in Form einer Blechplatte angeformt ist und dass gegenüber dem Eingriffsabweiser (5) an der Einwurföffnung (4) ein oder mehrere starre Teile (34) gelenkig an der Umfangswandung nahe der oberseitigen Abdeckung angeformt sind.

14. Sammelbehälter nach einem der Ansprüche 1 bis 13, **dadurch gekennzeichnet, dass** die Umfangswandung aus mindestens zwei voneinander lösbaren Teilen besteht, wobei bei einer viereckigen Umfangswandung jeder Teil aus zwei Ummantelungsteilen (9, 10) besteht, welche entlang einer gemeinsamen Kante (11) gelenkig miteinander verbunden sind und wobei ihre freien Kanten (13) dergestalt umgebogen sind, dass sie mit den ebenfalls umgebogenen freien Kanten (13) des zweiten Teiles leicht lösbar verkantet werden.

15. Sammelbehälter nach einem der Ansprüche 1 bis 14, **dadurch gekennzeichnet, dass** die Umfangswandung und die oberseitige Abdeckung des Sammelbehälters aus Leichtmetall oder formstabilem Verbundwerkstoff gefertigt sind.

## Claims

1. The collecting container described here contains an opening for the insertion of waste, especially for waste paper, including paper where classified information is recorded. The said container consists of a body, an inner container, preferably an insertable bag, and an assembly of rods, which keeps the inner container in a fixed position. The body consists of a bottom part and a container (2) which can be put on the bottom part. The container (2) consists of an upper cover and a side part. It can be fastened to and detached to the bottom part (3). The assembly of rods (19), to which the inner container can be fastened, is arranged in the body in an upright way. The assembly of rods (19) is also attached to the bottom part (3). It contains holding devices (22, 31, 32) to which the inner container is fastened and which keep it in a fixed position. To remove the inner container (2), it is lifted above the assembly of rods (19).

2. Collecting container as described in claim 1 ― characteristic features: In this version, one or several mounting links (24), which are attached to the assembly of rods (19) and which protrude through one or several gaps (8) in the upper cover of the container (2). These mounting links (24) can be locked by means of a ratchet in such a way that the container (2) cannot be lifted by unauthorised persons. The assembly of rods (19) consists of a U-shaped part with two legs (20, 21), which are connected by a clamp (23). A mounting link (24) is situated in the centre of this clamp (23), which is curved between the mounting link (24) and one of the two curves.

3. Collecting container as described in claim 1 or 2 ― characteristic features: In this version, two holding devices are fixed in opposite corners on the interior side of the side part. These holding devices are on the same level as the holding devices (22) fixed to the assembly of rods (19). These holding devices and the holding devices (22) fixed to the assembly of rods (19) keep the inner container in a fixed position.

4. Collecting container as described in claim 1, 2 or 3 ― characteristic features: In this version the container has a two-part assembly of rods (19). The first part is U-shaped and is connected to both base plates (18) and the bottom part (3). In its centre of gravity, (28) it is connected to the second part (27) by hinges. Both ends (29, 30) of the second part (27) are situated in the body near the upper cover. The hinged connection mounted to the second part (27) and its centre of gravity (28) is attached in such a way that the second part (27) can be pivoted in all directions.

5. Collecting container as described in claim 4: characteristic features: The legs (20, 21) of the U-shaped part of the assembly of rods (19) preferably match the side panels in length and end in a base plate (18). These base plates (18) are detachably or undetachably fixed close to the bottom plate (26). In case of a detachable connection, two holding flaps (38) are fixed to two opposite corners of the bottom plate (26). Preferably, these holding flaps (38), are folded to a U-shape along their length (39); a stop (20) projects from the holding flaps (38) at right angles in such a way that the base plates (18) can be slid into the holding flaps (38) up to the stop (20).

6. Collecting container as described in claims 1 to 5 ― characteristic features: In this version, the holding device and devices for keeping the inner container in a fixed position (22, 31, 32) which are attached to the assembly of rods (19), are hooks or clips. The inner container has eyes or straps for fastening it to the hooks or clips (22, 31, 32) attached to the assembly of rods (19).

7. Collecting container as described in claims 1 to 6 ― characteristic features: This version has a round or rectangular, but preferably rectangular cross-section, and a matching round or rectangular, but preferably rectangular base.

8. Collecting container as described in claims 1 to 7 ― characteristic features: In this version, the lower edges of the side panels are situated on the bottom plate (26) of the bottom part and are accurately encompassed by the side panels (14) of the bottom parts. In this version, the side panels (14) slope outwards towards the upper edge.

9. Collecting container as described in claims 1 to 8 ― characteristic features: In this version, the lower edge of the side panels of the upper part (14) encompass the side panels of the bottom part (3). The side panels of the upper part and slope slightly outwards towards the bottom edge.

10. Collecting container as described in claims 1 to 9 ― characteristic features: In this version, the bottom part consists of a flat bottom plate (26) and four corner caps (15). Their base (16) is fixed to the bottom plate (26) and has mounting links (17) whose ends (18) point outwards.

11. Collecting container as described in one of the claims 1 to 10 ― characteristic features: In this version, the upper cover and the side panels consist of separate component parts which can be connected by hinges.

12. Collecting container as described in one of the claims 1 to 11 ― characteristic features: In this version, the slit (4) is situated in the upper cover; behind the slit (4), a plate barrier (5) is mounted, which slants towards the interior. Opposite the barrier (5) behind the slit (4), one or several rigid parts (34) are connected to the interior wall of the upper lid by hinges.

13. Collecting container as described in one of the claims 1 to 12 ― characteristic features: In this version, the slit (4) is situated in the side panels immediately below the upper cover. Behind the slit (4), a plate barrier (5) which slants towards the interior of the container, is mounted. Opposite this barrier (5) behind the slit (4), one or several rigid parts (34) are fastened to the side panels close to the upper cover by hinges.

14. Collecting container as described in one of the claims 1 to 13 ― characteristic features: In this version, the side part consist of at least two detachable parts. If the container is rectangular, each of the two parts consists of two side panels (9, 10) which are connected by hinges at one of their edges (11). Their unattached edges (13) are folded in such a way that they cant with the folded free edges (13) of the second part. The parts can be detached from each other easily.

15. Collecting container as described in one of the claims 1 to 14 ― characteristic features: In this version, the upper cover and the side panels of the collecting containers are made of light metal or dimensionally stable composite materials.

## Revendications

1. Collecteur avec ouverture pour introduire des déchets, en particulier du papier usagé, lequel, le cas échéant, contient des notes, qui doivent rester confidentielles.
Composé d'un boîtier, d'un conteneur interne, plus précisément d'un sac-collecteur et d'une tringlerie au moyen de laquelle le conteneur est maintenu fixé, étant entendu que le boîtier est composé d'une partie au sol et d'un conteneur (2) posé sur ou au-dessus de cette partie au sol, constitué d'un couvercle supérieur et d'une paroi latérale.
Le conteneur (2) peut se dissocier de la partie au sol (3). Il est **caractérisé par le fait que** la tringlerie (19) est installée à l'intérieur du boîtier, qu'elle est verticale, que le conteneur se fixe sur elle et peut en être détaché, que cette tringlerie (19) est reliée à la partie au sol (3) et est équipée de dispositifs (22, 31,32) pour fixer et maintenir en place le conteneur. Le conteneur (2), pour être sorti, devra être soulevé par-dessus la tringlerie.

2. Collecteur selon l'objectif 1, **caractérisé par le fait qu'**une ou plusieurs pattes fixées sur la tringlerie (19) passeront par une ou plusieurs pattes (24) dans le secteur du couvercle supérieur (2), sortiront à cet endroit vers l'extérieur et seront verrouillées de telle sorte que le conteneur (2) ne pourra pas être soulevé par des personnes non autorisées. La tringlerie (19) est composée d'une partie en forme de U avec deux jambages (20, 21) reliés par une pièce de liaison (23). La pièce de liaison (23), munie en son centre d'une patte (24) est recourbée entre cette languette (24) et l'un des deux coudes.

3. Collecteur selon l'objectif 1 ou 2, **caractérisé par le fait que** sur la face intérieure de la paroi, deux fixations en diagonale se font face, lesquelles, au même niveau que les fixations (22) se trouvent sur la tringlerie (19) et assurent en même temps que les fixations (22) de la tringlerie (19) le maintien en place du conteneur.

4. Collecteur selon objectifs 1,2 ou 3, **caractérisé par le fait que** la tringlerie (19) est composée de deux parties, dont une première est façonnée en forme de U et reliée au socle (3) par deux panneaux verticaux (18). Cette tringlerie est reliée en son centre de gravité (28) à une seconde partie (27). Les deux extrémités (29, 30) de la seconde partie(27) sont libres à l'intérieur du boîtier, à proximité du couvercle supérieur, et la liaison articulée prend appui sur la deuxième partie (27) á son centre de gravité (28) et la seconde partie peut pivoter librement dans toutes les directions.

5. Conteneur selon l'objectif 4, **caractérisé par le fait que** les jambages (20,21) de la partie en forme de U de la tringlerie, qui sont de préférence de même longueur, correspondent à peu près à la longueur linéaire de la paroi circulaire, aboutissent chacune dans un panneau vertical. Les panneaux verticaux(18) sont reliés de façon dissociable ou indissociable au panneau de sol (26). et que des languettes de fixation sont montées solidement sur le panneau de sol (26), à proximité des deux angles de la partie au sol
disposés en diagonale. Les côtés longitudinaux (39) des languettes de fixation (38) sont recourbés et munis de préférence d'une butée recourbée (20) à 90° sur l'un de leurs côtés avant, de telle manière que les panneaux verticaux (18) puissent être glissés jusqu'à la butée dans les languettes de fixation.

6. Un collecteur selon l'un des objectifs 1 à 5 **caractérisé par le fait que** les dispositifs (22,31,32) sur la tringlerie (19) soient façonnés en crochets ou en agrafes pour
fixer et maintenir en place le conteneur. Le conteneur est muni le cas échéant, dans la partie de son ouverture, d'oeillets ou de boucles pour l'accrocher dans les dispositifs (22,31,32) de la tringlerie (19).

7. Collecteur selon l'un des objectifs 1 à 6, **caractérisé par** une paroi ronde ou angulaire, une coupe de préférence rectangulaire et une partie au sol selon une projection horizontale correspondante ronde ou angulaire, de préférence rectangulaire.

8. Un collecteur selon l'un des objectifs 1 à 7 **caractérisé par le fait que** les arêtes inférieures de la paroi reposent sur le socle de la partie au sol (26) et que celle-ci s'emboîte exactement dans les parties latérales (14) de la partie au sol, en considérant que ces parties latérales (14) sont de préférence évasées vers l'extérieur.

9. Collecteur selon les objectifs 1 à 8, **caractérisé par le fait que** les arêtes inférieures de la paroi enserrent les parties latérales(14) du socle (3) et que la paroi en direction de la partie au sol est légèrement conique.

10. Collecteur selon les objectifs 1 à 9, **caractérisé par** une partie au sol constituée d'une plaque au sol plate (26) et de quatre parties de limitation en angle (15), dont une base (16) est reliée de facon indissociable à la plaque au sol et munie de pattes(17) en angle droit orientées vers le haut avec de préférence des parties terminales orientées vers l'extérieur.

11. Collecteur selon les objectifs 1 à 10, **caractérisé par le fait que** le couvercle supérieur et la paroi sont composés d'éléments séparables les uns des autres et qui peuvent être éventuellement reliés les uns aux autres par une charnière.

12. Collecteur selon l'un des objectifs 1 à 11, **caractérisé par le fait que** l'ouverture pour introduire le papier (4) est aménagée dans le couvercle supérieur, que derrière cette ouverture (4) se trouve un dispositif (5), orienté obliquement vers l'intérieur du collecteur pour en interdire l'accès par la main, sous forme d'une plaque de tôle, et qu'en face de ce dispositif (5), près de l'ouverture, un ou plusieurs éléments rigides mais articulés (34) sont installés à l'intérieur du couvercle supérieur.

13. Collecteur selon les objectifs 1 à 12, **caractérisé par le fait que** l'ouverture dans la paroi est placée juste à côté du couvercle et que derrière l'ouverture est placé un dispositif orienté obliquement vers l'intérieur, pour empêcher de passer la main, sous forme d'une plaque de fer et qu'en face de ce dispositif un ou plusieurs éléments rigides mais articulés sont placés près du couvercle supérieur.

14. Collecteur selon les objectifs 1 à 13, **caractérisé par le fait que** la paroi intérieure est constituée de deux éléments détachables l'un de l'autre. Pour une paroi rectangulaire, chaque élément est constitué de deux parties de manteau, reliées entre elles par une arête commune et articulées. Leurs arêtes libres sont incurvées de sorte qu'elles peuvent être facilenent désolidarisées des arêtes également incurvées du second élément.

15. Collecteur selon les critères 1 à 14, **caractérisé par le fait que** la paroi externe et le couvercle supérieur sont réalisés en métal léger ou en plastique stable de forme.
